# EUROPEAN PATENT APPLICATION

(11) **EP 1 022 921 A2**
(43) Date of publication of application: **26.07.2000**
(21) Application number: 00300426.4
(22) Date of filing: 20.01.2000
(51) Int. Cl.: H04Q 7/38

(54) **Dynamic management of traffic channel allocation**

(30) Priority: 21.01.1999 US 234812
(71) Applicant: NORTEL NETWORKS CORPORATION, Montreal, Quebec H2Y 3Y4 (CA)
(72) Inventor: Zhang, Chang-Gang, Plano, Texas 75025 (US); Delrio, Jorge Alberto, Plano, Texas 75093 (US); Tang, Yuqiang, Plano, Texas 75025 (US); Agostina, Remo Louie, Richardson, Texas 75082 (US)
(74) Representative: Funnell, Samantha Jane

(57) **Abstract**

A method and system for dynamically managing traffic channel allocation within a wireless telecommunications system that includes a mobile switching center and a mobile subscriber unit. First, a traffic channel list is generated within a mobile switching center. Next, the traffic channel list is grouped into a plurality of traffic channel subsets within the mobile switching center. Thereafter, one of the plurality of traffic channel subsets is selected and assigned to the mobile subscriber unit. Next, forward channel quality measurements are periodically performed on the assigned traffic channel subset, thereby obtaining forward channel quality results. Finally, the forward channel quality results are reported to the mobile switching center, such that the traffic channel list may be dynamically updated.

## Description

### BACKGROUND OF THE INVENTION

### 1. Technical Field:

The present invention relates in general to an improved wireless communications system. In particular, the present invention relates to a method and system for improving the reliability of traffic channel allocation in a wireless communications system. Still more particularly, the present invention relates to a method and system for dynamically managing traffic channel allocation by utilizing active mobile subscriber units to perform forward channel quality measurements on a specified list of traffic channels and combining those results with reverse channel quality measurements thereby enhancing adaptive channel allocation capacity.

### 2. Description of the Related Art:

A cellular telephone system typically includes mobile subscriber units that may be mobile or portable, and cellular base stations that are connected to a public telephone company via one or more cellular switching networks. Each cellular subscriber has an assigned cellular telephone number that allows the subscriber to place and receive calls within a widespread range of the cellular base stations, such as throughout a metropolitan area. Cellular telephone systems are based on a structure of associated cells. Each cell covers a specified geographic area that (a) is defined for a specific mobile communications system; and (b) has its own base station and a single controller interconnected with a public telephone network.

Within each cell a base station system (BSS) communicates with many mobile subscriber units at once via a base transceiver station (BTS), utilizing one defined transmit/receive communications channel per mobile subscriber unit. A mobile subscriber unit (a control unit and a transceiver that transmits and receives wireless transmissions to and from a cell site) utilizes a separate, temporary wireless channel to talk to a cell site. Transmit/receive communication channels utilize a pair of frequencies for communication - one for transmitting from the cell site base transceiver station, called the forward link, and one frequency for the cell site to receive calls from the users, called the reverse link. Both the forward and reverse link must have sufficient signal strength to allow transmission of user data. For ease of reference, the phrase "forward channel measurement" will be utilized hereinafter to denote a measurement performed on the forward link of a given communications channel. Similarly, the phrase "reverse channel measurement" will be utilized to denote a measurement performed on the reverse link of a given communications channel.

Corresponding to the explosive growth in cellular subscriber density, radio frequency (RF) related techniques providing more capacity within a limited RF spectrum, are urgently required. For Time Division Multiple Access (TDMA) based technologies, cell splitting or reduction in reuse pattern provides additional capacity under the condition that the carrier to interference ratio in both forward and reverse directions satisfies required criteria. Adaptive channel allocation (ACA), sometimes referred to as "dynamic channel allocation", is recognized as one of the most promising techniques for enhancing wireless traffic capacity, especially when utilized within a hierarchical cell structure. The potential capacity of ACA depends critically on the ability to monitor a channel's condition, in terms of interference, in both forward and reverse directions before the channel is assigned or reassigned. For optimal traffic channel allocation results, channel quality measurements, such as interference level measurements, should be made on all traffic channels. Given the unpredictability inherent in mobile communications, these measurements should be performed on a continuous basis.

As its name implies, ACA utilizes network resources to monitor the real time status of communications traffic. In this way, any changes or problems that arise involving propagation of signals can be accommodated by dynamic adjustment of channel assignments. The goal of ACA is therefore to maintain adequate transmission channel quality in real time. This goal is particularly important in wireless, mobile communications systems, such as cellular telephone systems, since conditions affecting transmission quality may be constantly changing. Different ACA schemes utilize different criteria for selecting and updating available channels. Reverse channel monitoring currently constitutes the primary means by which many ACA schemes are able to effectively assign and reassign traffic channels. In general, reverse channel measurement is conducted by a base station system (BSS) on signals transmitted from mobile subscriber units (MSUs) within the BSS's coverage area. Limited forward traffic channel monitoring is therefore a limitation in many ACA schemes.

In order to alleviate the problem of limited forward channel measurement and monitoring, Mobile Assisted Channel Allocation (MACA) has been introduced in IS-136. As currently implemented, however, MACA does not adequately achieve reliable forward traffic channel monitoring and is fundamentally limited by its nature. As currently implemented, a MACA list consisting of up to 15 channels, in addition to the current serving digital control channel (DCCH), is broadcast to all idle MSUs in a cell. These idle MSUs receive this MACA list from the base transceiver station utilized within that particular cell. These mobile subscriber units will then perform forward signal strength measurements (short term, based on 4 samples only) on channels in the list other than the serving DCCH. Since many current MACA schemes utilize idle MSUs, the results of the channel measurements are not reported back to the base transceiver station until each MSU becomes active as when one of the following events occurs: registration, page response, origination, audit confirmation, etc.

There are several problems that current MACA schemes present. First, current MACA schemes often depends on a MACA-capable MSU population in the network and further, on how many of these MSUs are idle at any given time. Second, the sample rate and reporting frequency from each MSU is too low and unpredictable to reliably track channel history. Another problem with this method of tracking channel quality is that when traffic is at a high lever, there is a corresponding reduction in the number of idle MSUs available to perform the measurements which are more urgently required due to interference created by the high traffic level.

Another proposed method for verifying traffic channel quality is referred to as "all sector scanning", which utilizes idle radios within a base station system to monitor interference conditions that may exist outside the serving partition. This method of measurement is fundamentally similar to reverse channel measurement except that it may be utilized to provide a rough estimate of forward interference. However, the interference sources and propagation paths are different, and so this method also fails to be a reliable traffic channel verification method. Typical sector scanning methods may also require dedicated base station radios to perform scanning. Therefore the accuracy and speed of sector scanning may depend on the relative number of channels to be scanned as compared with how many radios are utilized to perform the scanning. If scanning is limited to idle radios, then at high traffic levels there is a corresponding reduction in the number of idle base station radios available to perform the required scanning, thus reducing the effectiveness of sector scanning as a method of tracking channel quality.

From the foregoing it can be appreciated that a need exists to provide a method and system for monitoring forward traffic channel quality utilizing active mobile subscriber units and integrating the resultant forward channel quality information with reverse channel quality measurements, thereby ensuring optimal adaptive or dynamic channel allocation, such that the potential capacity of adaptive channel allocation can be more effectively utilized.

### SUMMARY OF THE INVENTION

A method and system are disclosed for dynamically managing traffic channel allocation within a wireless telecommunications system that includes a mobile switching center and a mobile subscriber unit. First, a traffic channel list is generated within a mobile switching center. Next, the traffic channel list is grouped into a plurality of traffic channel subsets within the mobile switching center. Thereafter, one of the plurality of traffic channel subsets is selected and assigned to the mobile subscriber unit. Next, forward channel quality measurements are periodically performed on the assigned traffic channel subset, thereby obtaining forward channel quality results. Finally, the forward channel quality results are reported to the mobile switching center, such that the traffic channel list may be dynamically updated.

The present invention advantageously provides an improved wireless communications system in which there is an improved methodology yielding an increased reliability in traffic channel allocation. The present invention beneficially provides a method and system for dynamically managing traffic channel allocation by utilizing active mobile subscriber units to perform forward channel quality measurements on a specified list of traffic channels and combining those results with reverse channel quality measurements, thereby enhancing adaptive channel allocation capacity.

### BRIEF DESCRIPTION OF THE DRAWINGS

The novel features believed characteristic of this invention are set forth in the appended claims. The invention itself, however, as well as a preferred mode of use, and advantages thereof, will best be understood by reference to the following detailed description of an illustrative and exemplary embodiment when read in conjunction with the accompanying drawings, wherein:
**FIG. 1** illustrates a diagram of a communications system in which a preferred embodiment of the present invention may be implemented;
**FIG. 2** depicts a block diagram illustrative of a mobile subscriber unit (MSU) with which the method and system of the present invention may be implemented;
**FIG. 3A** is a block diagram of a switch in which a preferred embodiment of the present invention may be implemented;
**FIG. 3B** is a block diagram of physical components in an intelligent network in which a preferred embodiment of the present invention may be implemented;
**FIG. 4** is a simplified block diagram depicting a channel allocation system comprised of devices and entities that may be utilized to implement the method and system of the present invention; and
**FIG. 5** illustrates a simplified series of steps that may be utilized to enhance channel allocation in accordance with the teachings of the present invention.

### DETAILED DESCRIPTION OF PREFERRED EMBODIMENT

The potential capacity of adaptive channel allocation depends critically on the determination of channel condition in terms of interference in both forward and reverse directions before assignment. The method and system of the present invention provide an effective means for traffic channel condition monitoring. Furthermore, the method and system of the present invention utilizes a Mobile Assisted Handoff (MAHO) reporting scheme that offers the ability to closely monitor traffic channel condition in a forward direction. Currently, the channel condition in a reverse direction is measured by utilizing idle base station system radios to make reverse channel quality measurements. The present invention includes an additional step in which active MSUs perform channel quality measurements (CQMs) on pre-assigned traffic channels and report the results utilizing a MAHO reporting procedure. Thereafter, for each traffic channel, CQMs in the forward direction are integrated with CQMs in the reverse direction. The quality of channel allocation is thereby substantially enhanced, resulting in greater potential capacity and reliability of current adaptive channel allocation methods.

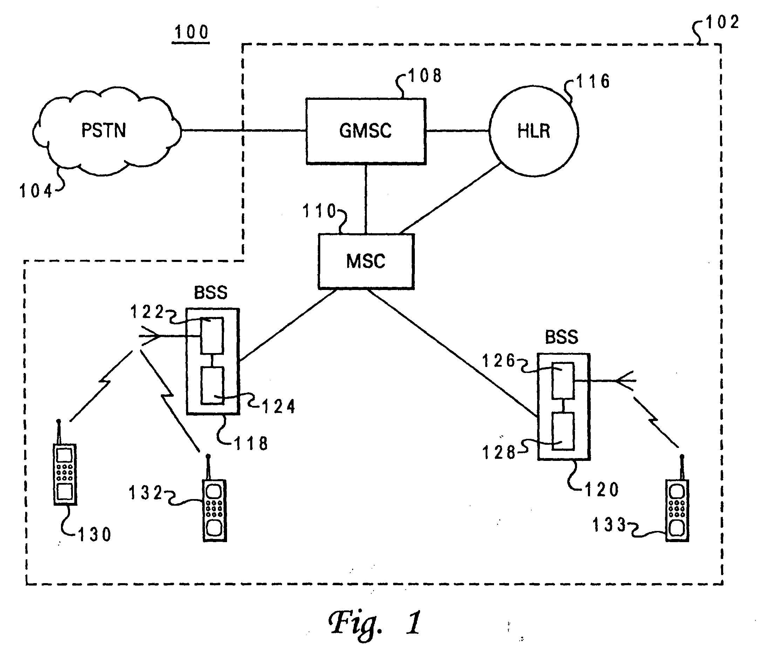

With reference now to the figures and in particular with reference to **FIG. 1,** there is depicted a block diagram illustrative of an example physical configuration of a communications system **100** in accordance with the present invention. As illustrated in **FIG. 1,** communications system **100** includes the network interconnection of a cellular system **102** to a Public Switched Telephone Network (PSTN) **104.** Cellular system **102** is a TDMA wireless communications system in the depicted example. Although the depicted example is a TDMA system, those skilled in the art will appreciate and understand the extensions necessary to implement the present invention in other types of wireless communications system, such as, for example, Global System for Mobile communications (GSM) or Japanese Digital Cellular Standards.

Cellular system **102** includes two mobile switching centers (MSCs), including a gateway MSC (GMSC) **108** and MSC **110.** In accordance with the teachings of the present invention, both GMSC **108** and MSC **110** may contain a channel database, referred to hereinafter as a channel allocation table. The channel allocation tables that may reside within the MSCs are not explicitly depicted in **FIG. 1** but are discussed in further detail in association with the following figures. MSC **110** and GMSC **108** are responsible for the switching of trunk circuits as well as the processing of call setup and mobility management signaling messages. In addition to these standard switching functions, GMSC **108** functions as a telecommunications gateway, and is coupled to PSTN **104.** Cellular system **102** also includes base station systems (BSSs) **118** and **120.** BSS **118** includes a base transceiver station (BTS) **122** and a base station controller (BSC) **124.** Similarly, BSS **120** includes a BTS **126** and a BSC **128.** Also illustrated in **FIG. 1** are wireless communications devices in the form of mobile subscriber units (MSUs) **130, 132** and **133.** MSUs **130, 132** and **133** may be, for example, a handheld cellular phone, but may comprise other portable or stationary wireless communication devices.

GMSC **108** performs switching of a call to or from PSTN **104** and MSUs **130**, **132** and **133** within cellular system **102**. Each MSU utilizes a separate, radio frequency (RF) channel to communicate with a BSS. The RF channels utilized for control functions such as user authentication will be referred to hereinafter as control channels. In contrast, RF channels utilized by MSUs to conduct communications are sometimes referred to as voice channels and will be referred to hereinafter interchangeably as "traffic channels". RF channels utilize a pair of frequencies for communication - one for transmitting from a BTS, the forward link, and one frequency for the BTS to receive transmissions from MSUs, the reverse link. For clarity of the discussion that follows, a channel quality measurement taken on a forward link of an RF channel will be referred to as a forward channel measurement. Likewise, a CQM performed on a reverse link will be referred to as a reverse channel measurement.

A Home Location Register (HLR) **116** is a functional unit within typical cellular systems such as cellular system **102**, and is utilized for management of mobile subscribers. Subscriber information and the part of the MSU information that permits incoming calls to be routed to the MSC for a particular MSU are stored within HLR **116**. For example, MSU identity, ISDN number, and subscriber profile data are stored within HLR **116**. MSCs **108** and **110** perform the necessary switching functions for any compatible MSU located within a geographic area associated with a particular MSC, called an MSC area. An MSC monitors the mobility of its subscribers and manages necessary resources needed to handle and update location registration procedures and carry out handoff functions. Although, in the depicted example, only two MSCs are illustrated in cellular system **102**, other numbers of MSCs may be employed depending on the communications system.

BSSs **118** and **120** are the physical equipment providing radio coverage to defined geographical areas called cells. BSSs **118** and **120** contain the hardware necessary to communicate with MSUs **130**, **132** and **133**. BSC **124** and BSC **128**, within BSSs **118** and **120** respectively, perform control functions, while BTS **122** and BTS **126** perform the transmitting/receiving function. The BTSs are the radio transmission/receiving equipment and are employed to cover each cell.

In one embodiment of the present invention, which may be implemented within cellular system **102**, MSC **110** utilizes a Mobile Assisted Handoff (MAHO) capability, well known in TDMA digital technologies, to order MSUs such as MSUs **130** and **132**, through their serving BSS **118**, to perform forward RF channel quality measurements (CQMs) for a specified group of traffic channels and then to report the results back to BSS **118**. BSS **118** then pre-processes this frequent (once per second typically) CQM message in terms of proper averaging or other necessary treatment. Thereafter, BSS **118**, via BCS **124** and BTS **122**, delivers this CQM message to MSC **110** at which channel allocation is determined. Such forward channel quality information from active MSUs, is then integrated into the existing reverse channel measurement information, thereby increasing the efficiency of channel management and enhancing the capacity of adaptive channel allocation.

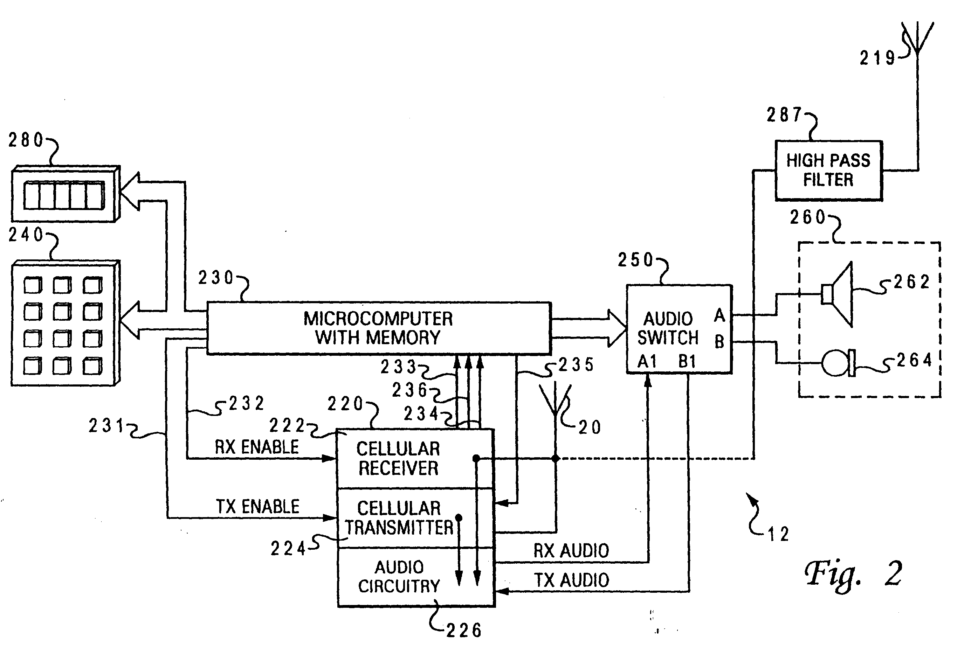

**FIG. 2** is a block diagram of a mobile subscriber unit (MSU) **12** with which the method and system of the present invention may be implemented. MSU **12** includes antenna **20**, cellular telephone transceiver **220**, microcomputer **230**, keypad **240**, display **280**, audio switch **250**, and handset **260**, including speaker **262** and microphone **264**. Microcomputer **230** is a computer built around a single chip microprocessor. Less powerful than a mini-computer or a mainframe computer, microcomputer **230** is nevertheless capable of complex tasks involving the processing of logical operations. Microcomputer **230** includes a central processing unit (CPU) (i.e., not shown), which is the computational and control unit of microcomputer **230**, and which interprets and executes instructions for MSU **12**.

Alternatively, cellular telephone transceiver **220** may be coupled to a single antenna **219** in place of antenna **20** and by way of high-pass filter **287**, respectively. High-pass filter **287** is utilized to filter only those signals which fall within a frequency range utilized by cellular telephones in the United States. High-pass filter **287** can be further modified to allow for cellular telephone frequency ranges of countries other than the United States. Specific design parameters of such a high-pass filter are left to the discretion of the manufacturer of a MSU such as MSU **12**. Display **280** can be any type of display device which visually presents data to a MSU user. Keypad **240** is a set of keys that are mounted on a small keyboard and are dedicated to a specific purpose, such as inserting numbers.

Control signals TX ENABLE **231** and RX ENABLE **232**, of microcomputer **230**, enable cellular transmitter **224** and cellular receiver **222**, respectively. In addition to enabling cellular transceiver **220**, via enabling signals **231** and **232**, microcomputer **230** also monitors signals such as Received Signal Strength Indicator (RSSI) data **233**, Bit Error Rate (BER) data **234**, RX DATA **236**, and TX DATA **235**. Microcomputer **230** measures these signals as a means for detecting incoming and outgoing signal strength, for detecting receive data and for sending transmit data, respectively. When MSU **12** is in an active mode (during a call for example), MSU **12** contributes to implementing the method and system of the present invention by performing forward channel measurements on a set of currently available traffic channels. This is accomplished beginning at call setup, when the MSC that is currently serving MSU **12** assigns a set of traffic channels to MSU **12**. The identity of the traffic channels in the assigned set are delivered from the MSC to the BSS that is within the coverage area of MSU **12**. The BSS will commence transmitting these selected RF traffic channels to MSU **12** in accordance with a protocol utilized in a typical Mobile Assisted Handoff (MAHO) scheme. MSU will then perform channel quality measurements of these selected utilizing microcomputer **230** and other supporting equipment as described below.

The above described signal parameter measurements and monitoring are performed by microcomputer **230** utilized in cooperation with the operation of cellular transceiver **220**. Note that the example depicted in **FIG. 2** merely describes one form of a MSU that can be utilized in accordance with the method and system of the present invention. One skilled in the art will appreciate that other types of wireless MSU systems can be implemented with a preferred embodiment of the present invention, as long as the particular cellular telephone system utilized allows for performing forward channel quality measurements such as RSSI and BER measurements.

In accordance with the method and system of the present invention, an MSU, such as MSU **12**, performs channel quality measurements on a pre-assigned set of traffic channels while it is active (during a call for example). These channel quality measurements consist of the MSU received signal strength (RSSI) and Bit Error Rate (BER) for each traffic channel in the set. Consistent with current mobile assisted handoff (MAHO) procedures, the MSU may also measure RSSI levels for up to 24 control channels in accordance with the instructions it receives from its serving BTS. The pre-assigned traffic channel list is incorporated into the usual MAHO list which is then sent to MSU **12** at the call setup, and is updated after a handoff of MSU **12** to another BTS. According to MAHO procedures as they are currently implemented, the channel quality information thus obtained, is utilized for handoff decisions.

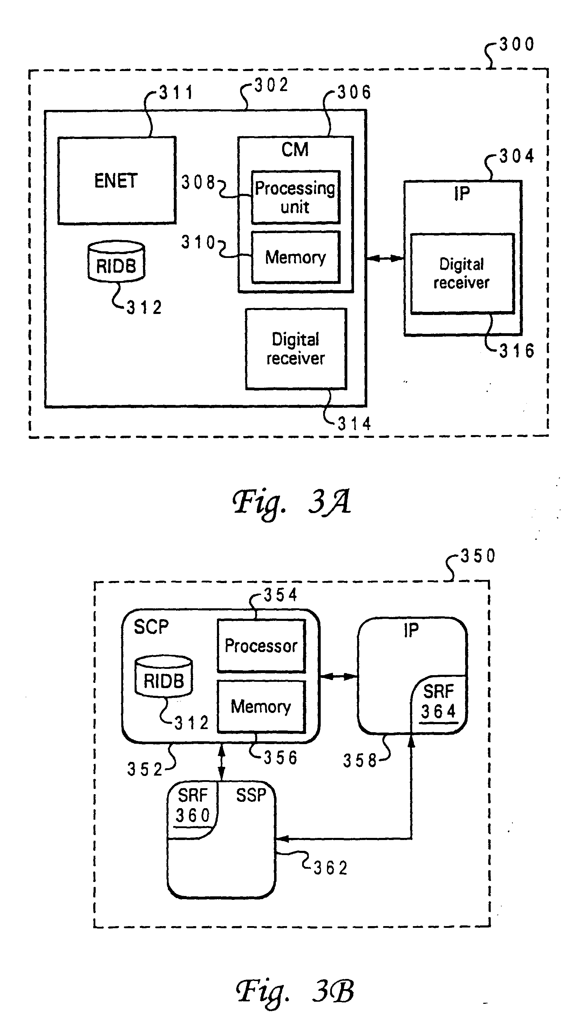

With reference now to **Figures 3A-3B**, block diagrams illustrating different physical configurations for switch components in which a preferred embodiment of the present invention may be implemented are depicted. **FIG. 3A** is a block diagram of a physical switch **300** representative of the DMS family of switch products available from Nortel Networks Corporation of Ottawa, Canada. Switch **300** may be employed within communications system **100** depicted in **FIG**. **1** as one of MSCs **108** or **110** and provides the functionality described with reference to **FIG. 1**.

Switch **300** as depicted in **FIG. 3A** includes a central unit **302** connected to intelligent peripheral (IP) **304**. Central unit **302** contains a computing module (CM) **306**, which employs processing unit **308** and memory **310** to provide switch intelligence functions for switch **300**. Processing unit **308** may comprise, for example, one or more processors executing instructions to provide logic for call processing and to implement processes described below for a preferred embodiment of the present invention. Memory **310** stores instructions and data and may include random access memory (RAM) and/or read only memory (ROM) for storing channel allocation data in accordance with the method and system of the present invention as described below.

Central unit **302** also includes enhanced network (ENET) **312**, which provides a switch fabric function. Central unit **302** also includes an integral routing information database (RIDB) **312**. Voice server functions for switch **300** are provided by intelligent peripheral (IP) **304**, which also contains digital receiver **316**. Digital receiver **316** along with another digital receiver **314**, that is located within central unit **302**, may provide voice recognition functions in place of or in addition to recognizing DTMF tones.

**FIG. 3B** depicts a block diagram of physical components in an intelligent network **350** representative of a International Telecommunications Union switch, defined by ITU-T Q.1200. Intelligent network **350** may be implemented within cellular network **102** as MSCs **108** or **110** in **FIG. 1** in accordance with a preferred embodiment of the present invention. Intelligent network **350** includes a service control platform (SCP) **352**, which is the switch intelligence for intelligent network **350**. Within service control platform **352** is a processor unit **354** and a memory **356**, which contain the processing logic for providing per call real-time channel allocation and assignment in the depicted example. Additionally, service control platform **352** also contains a routing information database (RIDB) **312**. Network **350** also contains a service switch platform (SSP) **362**, which provides switch fabric functions. Specialized resource functions (SRFs) **360** is found within service switch platform **362**. Specialized resource function (SRF) **360** provides DTMF functions for recognizing signals from MSUs. Intelligent peripheral (IP) is **358** also a part of network **350** and provides voice server functions. Additionally, within intelligent peripheral **358** is specialized resource function **364**, which also serves to provide DTMF functions.

In a preferred embodiment of the present invention, a switch such as switch **300** or intelligent network **350** maintains a traffic channel list which requires forward measurement for future allocation. The switch groups those traffic channels into subsets containing a desired number of channels, and then distributes those subsets to active MSUs at call setup. Each MSU receives and measures only one such traffic channel subset. The channel list and its grouping can be updated anytime through SACCH (Slow Associated Control CHannel) message.

A subset of such traffic channels thus occupies part of an MSU's MAHO channel list, and will be processed by the MSU in exactly same way as it does for control channels. Therefore, the number of traffic channels associated with a subset may be limited to a small number (three, for example) for an optimum tradeoff. For example, if there are ten active mobiles in a partition, then up to thirty different traffic channels may be monitored altogether (in the example of a TDM system having three timeslots per frame). The measurements conducted on the control channels remaining on each MSU's MAHO list (approximately twenty) still provides sufficient coverage for handoff adjacencies. The reporting scheme utilized in MAHO procedures is then utilized to deliver the resulting Channel Quality Measurement (CQM) values from the MSUs to the serving MSC. This process may entail the BSS receiving CQM reports every second from all active MSUs, and processing those CQMs periodically. The serving BTS then delivers the processed CQMs to the serving MSC at the event of channel allocation.

Although the examples in **Figures 1**, and **3A-3B** depict switches as the environments in which the processes of the present invention may be implemented, the processes may also be implemented in other data processing systems. For example, the processes of the present invention may be implemented within a computer having a connection to a switch, with the computer providing the logic and commands to the switch to execute the processes. Alternatively, the processes may be implemented to operate in an intelligent device operating in conjunction with a switch.

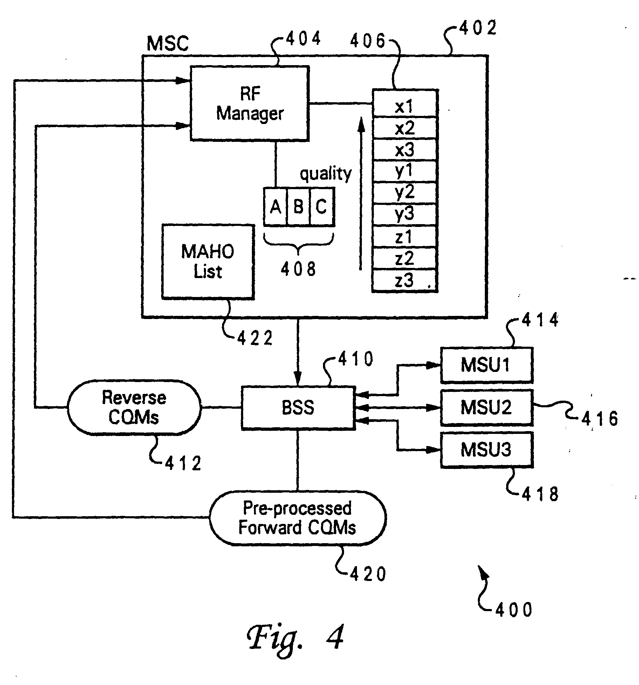

With reference now to **FIG. 4**, there is depicted a simplified block diagram depicting a channel allocation system **400** comprised of devices and entities that may be utilized to implement the method and system of the present invention. Channel allocation system **400** is comprised of a mobile switching center (MSC) **402**, which contains an RF resource manager **404** that is responsible for several channel allocation functions in accordance with the teachings of the present invention. As illustrated within MSC **402**, RF manager **404** is connected to a channel allocation table **406**. Although channel allocation table **406** is depicted in **FIG. 4** as a distinct entity, channel allocation table **406** may be contained within RF manager **404**. RF manager **404** is responsible for maintaining and updating a list of traffic channels within channel allocation table **406**. In one embodiment of the present invention, the traffic channel list within channel allocation table **406** may be initially generated by reverse RF scanning performed by a base station system (BSS). In a preferred embodiment of the present invention, and as illustrated within channel allocation table **406**, traffic channels may be arranged according to the relative quality of each traffic channel.

Traffic channel subsets are depicted as block **408**, which is also connected to RF manager **404** and located within MSC **402**. Traffic channel subsets **408** are comprised of subsets of the traffic channels contained within channel allocation table **406**. As illustrated within block **408**, traffic channel subsets are denoted as "A", "B" and "C" and are comprised of traffic channels "x1-x2-x3", "y1-y2-y3" and "z1-z2-z3" respectively. The number of traffic channel subsets depicted in **FIG. 4** is limited to three for simplification. Those skilled in the art will appreciate and understand the extensions necessary for many more traffic channel subsets to be included within block **408** consistent with the method and system of the present invention. RF manager **404** may be utilized as the means by which the traffic channel subsets within block **408** are grouped and arranged.

In order to implement the method and system of the present invention in which a mobile assisted handoff (MAHO) process is utilized for adaptive channel allocation, the subsets contained within block **408** may be delivered to MSUs during call setup. Within channel allocation system **400**, this is accomplished by utilizing MSC **402** to deliver one or more of the traffic channel subsets contained within block **408** to a BSS **410**. In a preferred embodiment of the present invention, a traffic channel subset from within block **408** is added to a list of RF channels depicted in **FIG. 4** as a MAHO list **422**. Along with a traffic channel subset selected from block **408**, MAHO list **422** is comprised of RF channels including a traffic channel assigned to the current call and several control channels. After a traffic channel subset has been added to MAHO list **422**, MAHO list **422** is delivered from MSC **402** to BSS **410**. As explained with reference to **FIG. 1**, BSS **410** includes at least one BSC and at least one BTS (neither depicted in **FIG. 4**), with which communications are maintained with MSUs such as MSU1 **414**, MSU2 **416** and MSU3 **418**. It should be noted that the traffic channel subsets added to MAHO list **422** are described herein as discrete units for convenience of explanation only. Consistent with the scope of the present invention, traffic channel subsets may be periodically updated within the MAHO list of a given MSU. This update, for example, may entail removing or replacing one or more of the individual traffic channels within the traffic channel subset.

For ease of explanation, it will be assumed that in accordance with the procedure described above, traffic channel subsets "A", "B" and "C" have been added to the MAHO lists assigned to MSU1 **414**, MSU2 **416** and MSU3 **418**, respectively during call setup procedures for each of the three MSUs. Furthermore, it will be assumed that the particular MAHO list, depicted in **FIG. 4** as MAHO list **422**, includes traffic channel subset "A". At call setup, MSU1 **414** receives MAHO list **422** and, in accordance with MAHO procedure specified in TDMA digital technologies, performs forward RF channel quality measurements (CQMs) on the channels included within MAHO list **422**. In accordance with the method and system of the present invention, the forward CQMs are performed on traffic channels "x1-x2-x3" by MSU1 **414** include RSSI and BER measurements. In this way, traffic channel subset "A" is processed by MSU1 **414** in accordance with standard MAHO procedure.

The results of the measurements performed on MAHO list **422** are utilized for handoff decisions and, in a preferred embodiment of the present invention, to update channel allocation table **406** such that adaptive channel allocation may be enhanced. During a call, MSU1 **414** performs frequent, periodic (once per second for example) forward measurements of the traffic channels included within subset "A". BSS **410** receives these measurements from MSU1 **414** as well as similar measurements from other MSUs and pre-processes these forward CQMs. This pre-processing may include such techniques as averaging in order to obtain a useful channel quality parameters. The resulting pre-processed forward CQMs **412**, for traffic channel subset "A", are then delivered from BSS **410** to RF manager **404**. BSS **410** measures the signal strength of traffic channels in the reverse direction, resulting in reverse channel quality data illustrated at block **412**. In accordance with a key feature of the present invention, RF manager **404** may then combine forward CQMs **412** with reverse CQMs **412** in order to effectively update channel allocation table **406** and allocate an traffic channel for the next call setup request.

As MSUs such as MSU1 **414** travel into locations such that a handoff is required, a new MAHO list is assigned at handoff. Another method by which a MAHO list and its accompanying subset of traffic channels may be updated during a call is by utilizing Slow Associated Control CHannel (SACCH) messages. An example of when the traffic channel subset such as traffic channel subset "A" may need to be updated would be if one of the channels ("x1" for example) has been allocated by RF manager **404** for an incoming call request. A SACCH message may then be delivered from MSC **402** to BSS **410** from which the MAHO list **422** for MSU1 **414** may be updated.

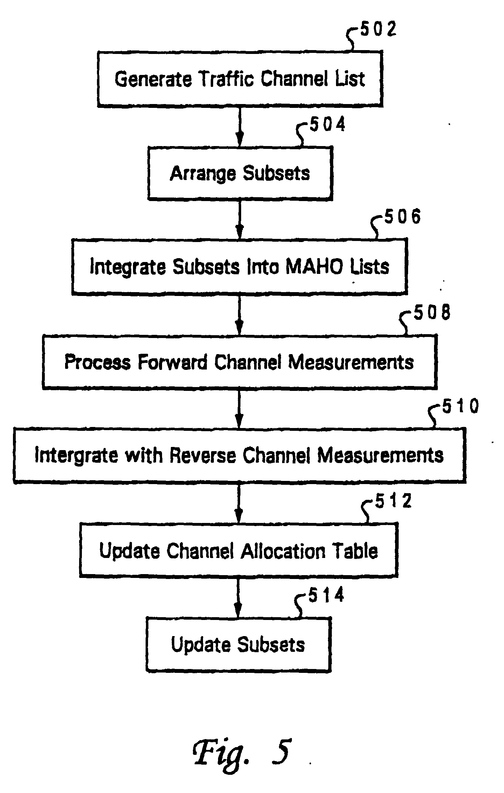

**FIG. 5** illustrates a simplified series of steps that may be utilized to enhance channel allocation in accordance with the teachings of the present invention. Step **502** depicts the creation of a traffic channel list such as that contained within channel allocation table **406**. Such a list of available traffic channels may be initially gathered by utilizing reverse radio scanning. Next, step **504** illustrates the arrangement of traffic channel subsets such as the traffic channel subsets "A", "B" and "C" depicted as block **408**. The traffic channel subsets thus arranged, are comprised of available traffic channels that, as illustrated in **FIG. 4**, are included in a traffic channel list within channel allocation table **406**. The arrangement depicted at step **504** includes grouping available traffic channels in a particular manner and also updating the assignments of one or more of the traffic channel subsets to one or more MSUs.

Step **506** depicts the addition of traffic channel subsets into MAHO list such as the MAHO list **422** assigned to MSU1 **414** at call setup. Thereafter, at step **508** there is illustrated the processing of the forward CQMs performed on the traffic channel subset included within the MAHO list. This processing, described in **FIG. 4** as "pre-processing", is performed by a BSS such as BSS **410** for the purpose of converting CQM data into a useful parameter that may be utilized by RF manager **404** to update channel allocation table **406**. Within RF manager **404**, or a similar device, and in accordance with a preferred embodiment of the present invention, reverse traffic channel measurements performed by BSS **410** are combined with the processed forward CQMs as illustrated at step **510**. RF manager **404** may then utilize the combined traffic channel quality information to update channel allocation table **406**, as depicted at step **512**. As explained with reference to **FIG**. **4**, any given traffic channel subset may be updated during a call as illustrated at step **514**. In one embodiment of the present invention, a Slow Associated Control CHannel (SACCH) message is utilized to relay necessary update information from BSS **410** to a MSU such as MSU1 **414**.

In order to perform the required MAHO procedures and enhancements that embody the method and system of the present invention, modifications are made to intersystem signaling messages. In a preferred embodiment of the present invention, the ANSI-41 intersystem signaling protocol is utilized. ANSI-41 is hereby incorporated by reference in its entirety herein. The ANSI-41 message modifications involve the addition of a new data element to selected ANSI-41 messages depending upon the particular call scenario. For example, the process of distributing traffic channel subsets to active mobiles at call setup may require modification of SACCH messages. Similarly, the periodic updates of these subsets may be made utilizing changes in the SACCH message format.

Preferred implementations of the invention include implementations as a computer system programmed to execute the method or methods described herein, and as a program product. According to the computer system implementation, sets of instructions for executing the method and system of the present invention are resident in a storage device such as the random access memory (RAM) of one or more computer systems. Until required by the computer system, the set of instructions may be stored as a computer-program product in another computer memory, for example, in a disk drive (which may include a removable memory such as an optical disk or floppy disk for eventual utilization in disk drive).

The computer-program product can also be stored at another computer and transmitted when desired to the user's workstation by a network or by an external communications network. One skilled in the art can appreciate that the physical storage of the sets of instructions physically changes the medium upon which it is stored so that the medium carries computer-readable information. The change may be electrical, magnetic, chemical, or some other physical change. While it is convenient to describe the invention in terms of instructions, symbols, characters, or the like, the reader should remember that all of these and similar terms should be associated with the appropriate physical elements. Thus, a method for implementing the steps described in association with **Figures 1, 2, 3A, 3B, 4**, and **5** can be accomplished with a computer-aided device. In such a method, data stored in a memory unit of a data-processing system such as a data-processing system, can represent steps in a method for implementing a preferred embodiment of the present invention.

The embodiments and examples set forth herein are presented in order to best explain the present invention and its practical application and to thereby enable those skilled in the art to make and utilize the invention. However, those skilled in the art will recognize that the foregoing description and examples have been presented for the purposes of illustration and example only. The description as set forth is not intended to be exhaustive or to limit the invention to the precise form disclosed. Many modifications and variations are possible in light of the above teaching without departing from the scope of the following claims.

## Claims

1. A method in a wireless telecommunications system for dynamically managing traffic channel allocation, said wireless telecommunications system including a mobile switching center and a mobile subscriber unit, said method comprising the steps of:
generating a traffic channel list within the mobile switching center;
grouping said traffic channel list into a plurality of traffic channel subsets within said mobile switching center;
selecting and assigning one of said plurality of traffic channel subsets to a mobile subscriber unit;
periodically performing forward channel quality measurements on said one of said plurality of traffic channel subsets, thereby obtaining forward traffic channel quality results; and
reporting said forward traffic channel quality results to said mobile switching center, such that said traffic channel list may be dynamically updated.

2. The method of claim 1 wherein said mobile switching center includes a channel allocation table, said method further comprising the step of:
generating and updating said traffic channel list within said channel allocation table.

3. The method of claim 1 or 2, wherein said step of selecting and assigning one of said plurality of traffic channel subsets to said mobile subscriber unit is performed during call setup associated with said mobile subscriber unit.

4. The method of claim 1, 2 or 3 wherein said step of periodically performing forward channel quality measurements on said one of said plurality of traffic channel subsets, and said step of reporting said forward traffic channel quality results to said mobile switching center are performed continuously during a call associated with said mobile subscriber unit.

5. The method of preceding claim, wherein said step of selecting and assigning one of said plurality of traffic channel subsets to said mobile subscriber unit, comprises the steps of:
during a call setup associated with said mobile subscriber unit, assigning a list of channels to be monitored by said mobile subscriber unit for handoff purposes; and
integrating said one of said plurality of traffic channel subsets into said list of channels.

6. The method of any preceding claim, wherein said step of periodically performing forward channel quality measurements on said one of said plurality of traffic channel subsets, and said step of reporting said forward traffic channel quality results to said mobile switching center, are both performed utilizing mobile assisted handoff procedures.

7. The method of any preceding claim, further comprising the steps of:
performing reverse channel quality measurements on said one of said plurality of traffic channel subsets, thereby obtaining reverse channel quality results; and
combining said reverse channel quality results with said forward traffic channel quality results, such that quality of said one of said plurality of traffic channel subsets may be more accurately determined.

8. The method of claim 7, wherein said step of performing reverse channel quality measurements on said one of said plurality of traffic channel subsets, and said step of combining said reverse channel quality results with said forward traffic channel quality results are performed continuously during a call associated with said mobile subscriber unit.

9. A system for dynamically managing traffic channel allocation within a wireless telecommunications network, said wireless telecommunications network including a mobile switching center and a mobile subscriber unit, said system comprising:
means for generating a traffic channel list within a mobile switching center;
means for grouping said traffic channel list into a plurality of traffic channel subsets within said mobile switching center;
means for selecting and assigning one of said plurality of traffic channel subsets to a mobile subscriber unit;
means for periodically performing forward channel quality measurements on said one of said plurality of traffic channel subsets, thereby obtaining forward traffic channel quality results; and
means for reporting said forward traffic channel quality results to said mobile switching center, such that said traffic channel list may be dynamically updated.

10. The system of claim 9, wherein said mobile switching center includes a channel allocation table that includes said traffic channel list, said system further comprising:
means for generating and updating said traffic channel list within said channel allocation table.

11. The system of claim 9 or 10, wherein said means for selecting and assigning one of said plurality of said traffic channel subsets to said mobile subscriber unit, comprises:
means for, during a call setup associated with said mobile subscriber unit, assigning a list of channels to be monitored by said mobile subscriber unit for handoff purposes; and
means for integrating one of said plurality of traffic channel subsets into said list of channels.

12. The system of claim 9, 10 or 11 further comprising:
means for performing reverse channel quality measurements on said one of said plurality of traffic channel subsets, thereby obtaining reverse channel quality results; and
means for combining said reverse channel quality results with said forward traffic channel quality results, such that quality of said one of said plurality of traffic channel subsets may be more accurately determined.

13. The system of claim 12 wherein said means for performing reverse channel quality measurements on said one of said plurality of traffic channel subsets and said means for combining said reverse channel quality results with said forward traffic channel quality results, are both contained within a base station system.

14. The system of claim 10 wherein said means for periodically performing forward channel quality measurements on said one of said plurality of traffic channel subsets comprises means for monitoring received signal strength and bit error rate for said one said plurality of traffic channel subsets.

15. A computer program element for dynamically managing traffic channel allocation within a wireless telecommunications network, said computer program element comprising computer program code means to make a computer execute procedure to perform the method steps of any one of claims 1 to 8:
means for generating a traffic channel list within a mobile switching center;
instruction means stored in signal bearing media for grouping said traffic channel list into a plurality of traffic channel subsets within said mobile switching center;
instruction means stored in signal bearing media for selecting and assigning one of said plurality of traffic channel subsets to a mobile subscriber unit;
means for periodically performing forward channel quality measurements on said one of said plurality of traffic channel subsets, thereby obtaining forward traffic channel quality results; and
means for reporting said forward traffic channel quality results to said mobile switching center, such that said traffic channel list may be dynamically updated.

16. The computer program element of claim 15, embodied on a computer readable medium.

17. The computer program product of claim 15 further comprising instruction means stored in signal bearing media for utilizing said traffic channel quality results to update said traffic channel list.
